Europäisches Patentamt

European Patent Office

Office européen des brevets

(19)

(11) Veröffentlichungsnummer: **0 141 246 B1**

## (12) EUROPÄISCHE PATENTSCHRIFT

(45) Veröffentlichungstag der Patentschrift: 24.04.91

(21) Anmeldenummer: 84111429.1

(22) Anmeldetag: 25.09.84

(51) Int. Cl.⁵: **H04Q 3/545**, G06F 15/16, G06F 11/00

(54) **Verfahren zm Betrieb eines Mutiprozessor-Steuerrechners, insbesondere für die Zentralsteuereinheit eines Fernsprech-Vermittlungssystems.**

(30) Priorität: 26.09.83 DE 3334796

(43) Veröffentlichungstag der Anmeldung:
15.05.85 Patentblatt 85/20

(45) Bekanntmachung des Hinweises auf die
Patenterteilung:
24.04.91 Patentblatt 91/17

(84) Benannte Vertragsstaaten:
AT BE CH DE FR GB IT LI NL SE

(56) Entgegenhaltungen:
DE-A- 3 334 773
DE-A- 3 334 796
US-A- 4 363 094

INTERNATIONAL SWITCHING SYMPOSIUM,
7.-11. Mai 1979, "paper 41C4", Seiten 956-961,
Paris, FR; D.T. ARGOE et al.: "Rétablissement
du système dans le calculateur 2 B"

(73) Patentinhaber: Siemens Aktiengesellschaft
Wittelsbacherplatz 2
W-8000 München 2(DE)

(72) Erfinder: Bitzinger, Rudolf, Dipl.-Ing.
Lechbrucker Strasse 11
W-8000 München 71(DE)
Erfinder: Engl, Walter, Dipl.-Ing.
Am Kellerberg 4
W-8152 Feldkirchen-W.(DE)
Erfinder: Humml, Siegfried
An der Freiheit 130
W-8122 Penzberg(DE)
Erfinder: Schreier, Klaus, Dipl.-Ing.
Nonnenwaldstrasse 8a
W-8122 Penzberg(DE)

INTERNATIONAL SWITCHING SYMPOSIUM, 21.-25. September 1981, "Session 14A, paper 2", Seiten 1-6, Montreal, CA; M. MAISONNEU-VE et al.: "Aspects of E10.S-TSS.5 system software: architecture, operating system and software testing and debugging"

INTERNATIONAL SWITCHING SYMPOSIUM, 7.-11. Mai 1979, "paper 30C", Seiten 627-633, Paris, FR; S. GIORCELLI: "Maintenabilité, fia-bilité et modularité dans l'architecture des systèmes informatiques"

REVIEW OF THE ELECTRICAL COMMUNICA-TION LABORATORIES, Band 30, Nr. 5, September 1982, Seiten 792-801, Tokyo, JP; A. NIWA et al.: "Multiprocessor control hardware design for DTS-11 digital toll switching system"

**Beschreibung**

Die Erfindung geht von dem im Oberbegriff des Patentanspruchs 1 genannten speziellen Verfahren aus, das für sich in der deutschen Patentanmeldung DE-A 33 34 792 AI angegeben ist. Die Erfindung eignet sich vor allem für eine Zentralsteuereinheit eines besonders großen Vermittlungssystems, z. B . für Fernsprechen, Fernschreiben, Bildtelefon usw., bei dem häufig eine hohe Vielzahl von vermittlungstechnischen Funktionen simultan bzw. quasisimultan durchzuführen sind, wie z. B. die Überwachung aller Teilnehmer auf Abheben und Rufnummernwahl, Wegesuche, Wegedurchschaltung, Signaltöne, Gebührenerfassung, Ansagen, Facilities verschiedenster Art, usw.

Solche Steuerrechner müssen oft eine extrem hohe Verfügbarkeit aufweisen. Z. B. sollen nämlich alle durch die Zentralsteuereinheit bewirkten Totalstörungen des ununterbrochen betriebenen Fernsprech-Vermittlungssystems möglichst kürzer als 1 Minute pro Jahr sein. Sowohl hohe Verfügbarkeit als auch höchste Zuverlässigkeit von solchen Zentralsteuereinheiten sind für sich bekannte Aufgaben.

Steuerrechner, auch Zentralsteuereinheiten von Vermittlungssystemen, welche aus einer hohen Vielzahl von Prozessoren (ohne oder mit einem lokalen Speicher) mit Hilfe eines allen Prozessoren gemeinsamen Bussystems gebildetwerden, sind für sich seit langem in der Diskussion, in verschiedener Weise entwickelt und, jedenfalls zum Teil, zumindest versuchsweise realisiert.

Bussysteme, welche eine wahlweise Verteilung der Aufgaben auf die verschiednen Prozessoren zulassen, insbesondere mittels Arbitern, sind für sich in verschiedensten Varianten bekannt. Darunter gibt es auch außerordentlich komfortable, vielseitige, außerordentlich sichere, in sich gedoppelte Bussysteme mit extrem hoher Verfügbarkeit, vgl. z.B. die nicht vorveröffentlichte DE-OS 33 28 405.

Zentralsteuereinheiten von Vermittlungssystemen haben bekanntlich neben den obenangegebenen vermittlungstechnischen Funktionen noch weitere Funktionen durchzuführen, insbesondere noch betriebstechnische und sicherungstechnische Funktionen. Zu den betriebstechnischen Funktionen gehören insbesondere Zuordnungen und Neuzuordnungen von Rufnummern zu Teilnehmeranschlüssen, Steuerung der Zusammenarbeit der verschiedenen Organe des Vermittlungssystems in genereller, nicht auf die einzelne aktuelle Verbindung bezogener Art wie Gebührentarifänderungen, Speicherausbau und damit verbundenen Adressenraumerweiterungen, Weiterausbau des Vermittlungsnetzwerkes bzw. der Teilnehmeranschlüsse, Installationen von bisher nicht vorgesehenen Facilities, Leitweglenkungsänderungen und Kurzwegänderungen, Bildtelefoneinführung, automatische Teilabschaltungen und stufenweise Wiedereinschaltungen nach Betriebsstörungen, Lastverteilungsänderungen, usw.. Bei den sicherungstechnischen Funktionen handelt es sich hingegen insbesondere um routinemäßige und/oder durch Alarme ausgelöste Fehlersuche bzw. Fehlereinkreisungsfunktionen, welche mitunter hierarchisch fein gegliedert sind entsprechendden sehr komplexen Ferhlersuchverfahren in sehr großen Vermittlungssystemen von z. B. 50 000 Teilnehmeranschlüssen in einem einzigen Fernsprechamt.

Es ist außerdem für sich bekannt, die Auslastung und die Fehlerfreiheit des Betriebs von Prozessoren auf verschiedenste Weise laufend zu überwachen und zu registrieren, insbesondere wenn der betreffende Prozessor zeitlich verschachtelt mehrere verschiedene Programme quasisimultan durchzuführen hat.

Es ist ferner bekannt (US-Patent 4363 094), Multiprozessor-Steuerrechner mit im Oberbegriff des Patentanspruchs angegebener Struktur je nach den vorliegenden Anforderungen im Redundanzbetrieb, in dem gedoppelte Teile sich jeweils im einen Fall im Aktivmodus und im anderen Fall im Standby-Modus befinden, oder aber im Lastteilbetrieb arbeiten zu lassen, in dem gedoppelte Teile Bestandteil jeweils eines gesonderten Steuerrechners sind.

Als Anforderung, die den Übergang von der einen Betriebsart in die andere erforderlich macht, kommt der Wechsel vom Aktivmodus in den Standby-Modus im Fehlerfall in Frage (Review Of The Electrical Communication Laboratories, Bd. 30, September 1982, Seiten 792 bis 801, Artikel von Niwa et al.)

Die Aufgabe der Erfindung ist, das im Oberbegriff des Patentanspruches 1 angegebene Verfahren mit vielen, häufig stark ausgelasteten, vielleicht mit verschiedensten Aufgaben befaßten, parallel arbeitenden Prozessoren so weiterzubilden, daß, ohne Beeinträchtigung des Normalbetriebes und ohne Beeinträchtigung der Verfügbarkeit und Zuverlässigkeit, ein abgespalteter Teil des Steuerrechners als weitgehend unabhängig/selbständig arbeitender Spezialrechner nebenher zur Verfügung steht. Der Spezialrechner kann z.B. auch dazu verwendet werden, das normale Steuerprogramm des Steuerrechners während des Normalbetriebes des Steuerrechners vorbereitend so zu modifizieren, daß später der Steuerrechner einen modifizierten Normalbetrieb durchführen kann.

Diese Aufgabe wird durch die im Patentanspruch genannten Maßnahmen gelöst.

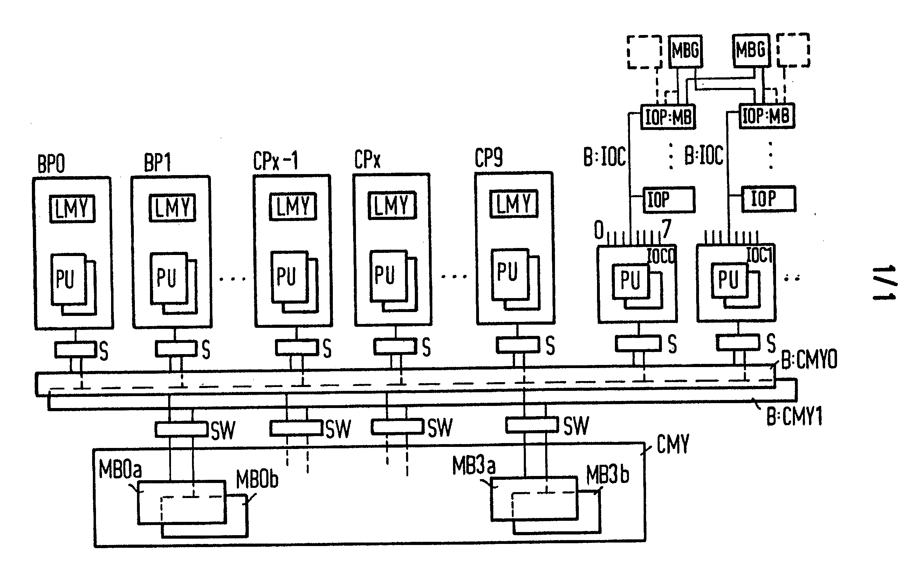

Die Erfindung wird anhand des in der Figur gezeigten - der Übersichtlichkeit wegen vereinfachten - Steuerrechnerbeispiels mit den Prozessoren BP, CP, IOC, IOP, dem Bussystem B:CMY und den Speicherbanken MB des Hauptspeichers CMY weiter erläutert.

Die Figur zeigt nämlich alle besonders wichtigen Teile einer Vermittlungssystem-Zentralsteuereinheit, bei der zwei sog. Basisprozessoren BPO/BP1, sowie 10 weitere Prozessoren CPO...CP9 über das Bussystem B:CMY zusammenarbeiten. Aus Sicherheitsgründen ist das Bussystem in sich gedoppelt, vgl. B:CMYO und B:CMY1. Jeder Prozessor enthält neben der eigentlichen, aus Sicherheitsgründen in sich ebenfalls gedoppelten, Prozessoreinheit PU jeweils einen prozessorindividuellen lokalen Speicher LMY.

Alle aktiv im Normalbetrieb befindlichen Prozessoren BP/CP führen, wenn genügend Verbindungsanforderungen vorliegen, simultan jeweils vermittlungstechnische Funktionen aus, d.h. Funktionen zur Erfüllung momentaner Anforderungen, die von rufenden und gerufenen Teilnehmern an das Vermittlungssystem gestellt werden.

Unter den - im wesentlichen untereinander gleichaufgebauten - Prozessoren üben die beiden Basisprozessoren BP in Normalbetriebszeiten, bevorzugt gemeinsam mit verteilten Rollen, betriebs- und/oder sicherungstechnische Funktionen aus, sowie, insbesondere bei höheren Verkehrsdichten, evtl. auch noch vermittlungstechnische Funktionen. Die übrigen aktiven, im Normalbetrieb befindlichen Prozessoren CP üben hingegen nur vermittlungstechnische Funktionen aus. Diese Dopplung der Basisprozessoren BP ist aus Sicherheitsgründen günstig, damit stets ein einwandfrei arbeitender Basisprozessor BP zur Durchführung dieser betriebs- und/oder sicherungstechnischen Funktionen zur Verfügung steht, insbesondere im Alarmfall bei Wiederanlauf des Vermittlungssystems nach einer teilweisen oder völligen Abschaltung des Vermittlungssystems unter Mitwirkung der Schalter S und SW. Diese Funktionen sollen dann bevorzugterweise nicht irgendwelchen beliebigen anderen Prozessoren CP überlassen werden, da, insbesondere in extremen Notfällen, dann zu oft nicht genügend Zeit besteht, dazu erst einen einwandfreien Prozessor CP unter den Prozessoren CP auszusuchen, insbesondere für den genannten Wiederanlauf des Vermittlungssystems auszusuchen.

Bei dem gezeigten Beispiel ist der an das Bussystem B:CMY angeschlossene Hauptspeicher CMY aus mehreren in sich gedoppelten Speicherbanken MBO...MB3 aufgebaut, wobei evtl. sogar alle Prozessoren BP, CP mittels der Schalter S über jede Hälfte des Bussystems B:CMY und weiter über die Schalter SW Zugriff auf alle Daten jeder Hälfte des Hauptspeichers CMY bzw. auf alle Daten jeder Hälfte seiner Speicherbanken MB haben, soweit nicht - z.B. durch Beschränkung der Adressen - die Berechtigung des Zugriffs eingeschränkt wird. Die Schalter S und SW ermöglichen also, jeweils zumindest eine, nämlich eine beliebige ,Hälfte der Speicherbanken, z.B. MB3a, über zumindest eine, nämlich eine ebenfalls beliebige, Hälfte des Bussystems, z.B. B:CMY1, mit dem jeweiligen Prozessor nach freier Wahl zu verbinden. Die Schalter S haben jeweils zwei getrennt steuerbare Schaltstrecken, nämlich eine vom Prozessor zur einen Bussystemhälfte B:CMYO, und eine vom Prozessor zur anderen Bussystemhälfte B:CMY1, wobei wahlweise beide Schaltstrecken durchgeschaltet, beide Schaltstrecken gesperrt, und beliebig nur die eine oder nur die andere Schaltstrecke durchgeschaltet werden können. Abweichend davon haben die Schalter SW sogar jeweils vier, bei Bedarf auch getennt steuerbare Schaltstrecken, nämlich je eine Schaltstrecke von jeder Bussystemhälfte B:CMYO/ B:CMY1 zu jeder Speicherbankhälfte, z.B. zu MB3a/ MB3b.

Die getrennte Schaltbarkeit aller Schaltstrecken der Schalter S und SW gestattet also, beliebige Wege für den Datenfluß über die durch Dopplung redundanten Teile der Zentralsteuereinheit herzustellen, und bei Bedarf/ Alarmen zu unterbrechen und neu aufzubauen, - insbesondere im automatischen Wiederanlauffall nach Totalausfall. Dem Fachmann ist der stufenweise automatische Neuaufbau des Steuerrechners nach Totalausfällen ein im Prinzip wohl vertrautes Betriebsverfahren bei Zentralsteuereinheiten von Vermittlungssystemen. Diese Schalter S und SW können in Normalbetriebszeiten auch dazu dienen, um den Betrieb von einer Hälfte von in sich gedoppelten Teilen auf die redundante andere Hälfte davon, z.B. von BPO auf BP1, umzuschalten, oder - bei vollem Betrieb beider der zusammengehörender Hälften in Normalbetriebszeiten - eine der beiden Hälften abzuschalten bzw. abzutrennen, z.B. um die Hälfte B:CMY1 des Bussystems und/oder die Hälfte MB3b der Speicherbank MB3 abzuschalten und um damit den vollen Normalbetrieb alleine mit der jeweils anderen Hälfte fortzusetzen, vgl. B:CMYO und MB3a. Die Schalter S und SW dienen im gezeigten Beispiel also zur Konfiguration des jeweiligen Steuerrechneraufbaus und des zugehörenden Datenflusses auch in Normalbetriebszeiten.

Die Figur zeigt also ein Beispiel für einen hochkomplexen Multiprozessor-Steuerrechner, wobei zumindest ein Teil der Prozessoren, vgl. BP, CP, IOC, IOP, über erste Schalter S und dadurch über jede Hälfte B:CMYO, B:CMY1 eines zentralen, in sich gedoppelten Bussystems B:CMY und daran angeschlossene zweite Schalter SW Zugriff auf jede Hälfte, z.B. MB3a oder MB3b, einer oder mehrerer, in sich gedoppelter Speicherbanken MB des eine Mehrzahl solcher Speicherbanken MBO...MB3 enthaltenden Hauptspeichers CMY hat.

Im erfindungsgemäß betriebenen Multiprozessor-Steuerrechner mit Hardware-Redundanzen, die normalerweise zur Sicherung gegen Totalausfall bei Ausfall einzelner Steuerrechnerteile dienen, können redundante Rechnerteile vorübergehend mittels Schaltern S und SW so vom Rechner, der sich weiterhin im laufenden Betrieb befindet, getrennt werden, daß die abgespalteten Teile für sich einen weitgehend unabhängigen Rechner bilden. Die auch für den Normalbetrieb vorgesehenen Trennstellen, welche ohnehin schon für den Ausfall einzelner Teile vorgesehen sind und welche z.B. durch Software und/oder durch fehlererkennende Überwachungsschaltungen der Hardware steuerbar sind, werden bevorzugt also sowohl zum Trennen der beiden Teilrechner als auch später zum automatischen Wiedervereinigen der Teilrechner zum normalbetriebenen ganzen Steuerrechner verwendet. Die in Steuerrechnern ohnehin meistens angebrachten verschiedenen Überwachunseinrichtungen, welche für den Anlauf und/oder Alarm bei Ausfall eines Teiles dienen, können also hierbei sowohl das Trennen der beiden Teilrechner, als auch vor allen das automatische Wiedervereinigen, also die Rechnerkonfiguration mittels der Schalter S und SW mitsteuern, vor allem um einen Totalausfall des laufenden Normalbetriebes zu vermeiden.

Die durch Dopplungen erreichten Redundanzen dienen also in Normalbetriebszeiten nur der Verfügbarkeit, damit bei Ausfall einzelner Teile andere redundante Teile vorübergehend den Normalbetrieb voll fortsetzen können, damit also der Totalausfall, und auch Versuche zum automatischen Wiederanlauf, bei solchen Ausfällen einzelner Teile vermieden werden können. Daher werden jedoch im Normalbetrieb nicht alle redundanten Teile stets benötigt; Überwachungseinrichtungen steuern bei Anlauf und bei Ausfall eines Teiles die Schalter S und SW so, daß die Umschaltung auf eine andere bisher redundante Hälfte den Totalausfall vermeidet.

Bei der Erfindung werden mehrere solche - zunächst - noch nicht benötigten redundanten Teile in einer Spezialbetriebszeit während der Normalbetriebszeit so vom Multiprozessor-Steuerrechner, während er sich weiterhin im laufenden Normalbetrieb befindet, abgetrennt , daß diese abgetrennten redundanten Teile für sich einen eigenen, weitgehend unabhängigen Rechner, eben den sog. Spezialrechner bilden. Die auch für den Normalbetrieb vorgesehenen Trennstellen, z.B. S und SW, können hierbei, z.B. durch Software und durch fehlererkennende Überwachungsschaltungen der Hardware gesteuert, zum Trennen der beiden Rechner als auch zum automatischen Wiedervereinigen der beider Rechner dienen.Das Wiedervereinigen dient z.B. dazu, einen Totalausfall des weiter hin im laufenden Normalbetrieb betriebenen eigentlichen Steuerrechners bei Ausfall eines wesentlichen Teils desselben zu vermeiden.

Um also bei Beginn der Spezialbetriebszeit redundante Teile des Steuerrechners abzuspalten und um diese abgespalteten Teile zu einem eigenen, - zumindest relativ - kleinen, selbständigen Spezialrechner ohne Störung des Normalbetriebes des restlichen Steuerrechners zusammenzuschalten, werden in der Spezialbetriebszeit einzelne dieser Prozessoren, z.B. nur ein einziger davon, z.B. CP9 und/oder IOC1 mit dessen IOP, zusammen mit einer Hälfte, z.B. B:CMY1, des Bussystems B:CMY, und zusammen mit einer oder mit mehreren Hälften der Speicherbanken MB des Hauptspeichers CMY, z.B. mit MBOa und MB3b, zu einem Spezialrechner für ein Spezialprogramm mittels Schaltern S und SW zusammengeschaltet. Das Spezialprogramm kann an sich ganz beliebig sein, also z.B. auch zur Vorbereitung einer mehr oder weniger starken Modifikation des - späteren - Normalbetriebsprogrammes des Steuerrechners dienen. Dieses Spezialprogramm läuft also im Spezialrechner ab, während in den übrigen Teilen des Steuerrechners, also im Restrechner, vgl. BP, CP ohne CP9, IOCO mit dessen IOP, B;CMYO und Rest von CMY, weiterhin das bisherige Normalbetriebsprogramm, z.B. für vermittlungstechnische Funktionen, abläuft. Später, unter Beendigung der Spezialbetriebszeit, spätestens bei Überlastung des weiterhin das Normalprogramm abarbeitenden Restrechners, insbesondere bei Ausfall eines wesentlichen Teils des Restrechners, unterbricht oder beendet der Spezialrechner sein Spezialprogramm und die Bestandteile des Spezialrechners, zumindest ein wesentlicher Teil seiner Prozessoren und/oder zumindest seine Bussystemhälfte, vgl. B:CMY1, werden mittels Schaltern S/SW mit dem Restrechner wieder so rechtzeitig verbunden, daß, jedenfalls im wesentlichen nur noch das Normalbetriebsprogramm, oder z.B. eine in der Spezialbetriebszeit neu eingegebene Modifikation davon, ohne Störung der Verfügbarkeit des Restrechners/Steuerrechners ablaufen kann.

Es handelt sich also bei der Erfindung um eine spezielle Betriebsweise des Steuerrechners, um ihn in zwei Rechner aufzutrennen, die - bis auf konfigurative Einschränkungen hinsichtlich der Umschaltung auf redundante Teile - voneinander unabhängig arbeiten können. Der Restrechner wickelt weiter den Normalbetrieb, z.B. Vermittlungsbetrieb ab, während der abgespaltene Spezialrechner z.B.keinen Normalbetrieb durchführt, vielleicht z.B. keinen Zugang zur später noch erläuterten vermittlungstechnischen Peripherie MBG hat, aber z.B. für DV-Aufgaben,z.B. zum Wochsel des Normalbetriebs-Anlagenprogramm und/oder für Softwareteste, wenn vielleicht auch eingeschränkt, zur Verfügung steht. Tritt aber im Restrechner während seines Normalbetriebs,wegen drohenden Totalausfalls desselben, eine Urstartbedingung auf, so erfolgt der Urstart bevorzugt für den gesamten Steuerrechner einschließlich Spezialrechner. Der Spezialrechnersoll bevorzugt nur infolge einer Anforderung durch eine spezielle Bedienung, bevorzugt von Hand bedient, anlaufen und bevorzugt keine automatischen konfigurativen Erweiterungen vornehmen. Da auch im erfindungsgemäßen Betrieb immer mit einem automatischen Anlauf des gesamten Steuerrechners mit Ladevorgängen gerechnet werden muß, ist bei einer bevorzugten Variante durch entsprechende Kennzeichnung von Platten des Spezialrechners sichergestellt, daß auch bei diesen Ladevorgängen nur auf die richtigen Dateien zugegriffen werden kann.

Das Einrichten eines erfindungsgemäßen Verfahrens wird bevorzugt durch Bedieneingabe mit Angabe der Konfiguration des Spezialrechners angestoßen. Letzterer wird z.B. zusammengeschaltet aus einem Basisprozessor, vgl. BP1, aus einer Bussystemhälfte zum Zugang zum gemeinsamen Speicher CMY, aus einem vollständigen Satz von Speicherbanken, z.B. alle a-Hälften aller Speicherbanken MB0...MB3,aus einem IO-Prozessor IOC mit seinem lokalen Bus B:IOC, und z.B. aus einem Plattengerät mit einer Systemplatte sowie vielleicht aus einem eigenen Bediengerät, - z.B. zur Eingabe des Spezialprogrammes und der zugehörenden zu verarbeitenden Daten.

Zunächst seinen weitere Einzelheiten des in der Figur gezeigten Beispieles dargelegt, bevor auf weitere Details von erfindungsgemäßen Varianten dieses Beispiels eingegangen wird.

Die Figur zeigt periphere Einheiten MBG, welche mittelbar oder unmittelbar auf die Leitungen des Vermittlungsnetzwerkes einwirken, z.B. im Rahmen der Wegesuche, Durchschaltung, Signalisierung, usw.. Diese peripheren Einheiten MBG sind hier ebenfalls in sich gedoppelt, vgl. die Auskreuzungen der Leitungen. Sie besitzen im gezeigten Beispiel eigene IO-Units, vgl. IOP;MB. Es sind weitere solche IO-Units an die lokalen Busse B:IOC angeschlossen, vgl. IOP, welche jeweils zwar mit weiteren solchen peripheren Einheiten verbunden sind, die aber der Übersichtlichkeit wegen in der Figur nicht mehr gezeigt sind.

Diese IO-Units IOP:MB...IOP bzw. deren lokale Busse B:IOC sind über IO-Prozessoren, IOC, vgl. IOCO, IOCO, mit dem Bussystem B:CMY verbunden. Durch Punkte wurde in der Figur angedeutet, daß noch weitere solche IO-Prozessoren IOC, insbesondere bei sehr großen Vermittlungssystemen, vorgesehen sein können.

Die peripheren Einheiten, vgl. MBG, sind jeweils mit dem Hauptspeicher CMY bzw. mit Teilen von dessen Speicherbanken MB verbindbar und/oder evtl. auch mit verschiedenen der Prozessoren BP/CP, von Fall zu Fall anders verteilt, verbindbar. Durch diese Verbindungen können Meldungen und/oder Anfragen von peripheren Einheiten MBG, und Meldungen und/oder Anfragen zu solchen peripheren Einheiten MBG hin, durchgeführt werden. Die vermittlungstechnischen Meldungen und/oder Anfragen einer peripheren Einheit MBG werden dabei bevorzugt autonom über das mit ihnen verbundene IO-Unit IOP per Ruf verteilt, z.B. indem das jeweils betreffende IO-Unit IOP, wenn es einen Ruf von der peripheren Einheit MBG erhält, dieser rufenden peripheren Einheit MBG einen der Prozessoren CP/BP bzw. einen Teil des Hauptspeichers CMY/MB zuteilt bzw. über das Bussystem B:CMY zuteilen läßt. Diese Zuteilung eines speziellen Prozessors und/oder eines speziellen Teils des Hauptspeichers CMY/MB an die z.B. zwei peripheren Einheiten MBG (1 Verbindung belegt ż.B. zwei MBGs) wird dann noch in einem speziellen Datenfeld abgespeichert, wobei dieses Datenfeld auch innerhalb einer Speicherbank MB des Hauptspeichers CMY angebracht sein kann. Durch diese Abspeicherungen im Datenfeld sind, insbesondere unter Mitwirkung der jeweils betroffenen IO-Units der betroffenen peripheren Einheiten MBG, alle späteren Meldungen oder Anfragen der betroffenen peripheren Einheiten MBG, welche diesem Ruf nachfolgen, jeweils zum selben, vorher zugeteilten Prozessor BP/CP bzw. zum selben Hauptspeicherteil MB sendbar, damit dort die betreffenden vermittlungstechnischen Funktionen, welche durch den Ruf ausgelöst werden, fortgesetzt werden können. Diese autonome Zuteilung per Ruf ermöglicht eine angenähert gleichmäßige Belastung aller Prozessoren CP bzw. BP mit vermittlungstechnischen Funktionen - zumindest kann diese Zuteilung dann jeweils entsprechend der momentanen Auslastung der betreffenden Prozessoren BP/CP so gesteuert werden, daß die dem Ruf folgenden Meldungen und/oder Anfragen vermittlungstechnischer Art wirklich jeweils rasch von einem der Prozessoren, der noch eine ausreichend freie Kapazität hat, durchgeführt werden können.

Wie in der Figur gezeigt ist, sind am Bussystem B:CMY der zentrale Hauptspeicher CMY bzw. seine Speicherbanken MB angeschlossen. Mindestens eine Mehrzahl der Prozessoren BP/CP, wenn nicht sogar alle Prozessoren BP/CP, können, z.B. quasisimultan über ihnen jeweils zugeteilte Zeitschlitze bzw. Zeitkanäle nach dem Zeitmultiplexprinzip, Zugriff zum Hauptspeicher CMY bzw. zu Teilen MB davon haben. Durch eine Zeitmultiplex-Betriebsweise des Bussystems B:CMY müssen nicht mehr jeweils längere Kommunikationen zwischen dem Hauptspeicher CMY und beliebigen Prozessoren CP bzw. BP abgewartet werden, bis ein anderer Prozessor seinerseits endlich auf Daten des Speichers CMY zugreifen kann bzw. dort Daten hinterlegen kann. Diese Zeitmultiplexbetriebsweise ist demnach in Anbetracht der vielen gleichzeitig parallelarbeitenden und mit jeweils verschiedenen Aufgaben befaßten Prozessoren BP, CP zur Verkürzungder Zugriffszeit zum gemeinsamen Speicher CMY sehr vorteilhaft. Besonders vorteilhaft ist, wenn der Hauptspeicher eine Vielzahl von unabhängig voneinander arbeitenden Speichersteuerungen bzw. Decodierern aufweist, wobei jeweils eine solche Speichersteuerung einem der Prozessoren CP/BP individuell vorübergehend zugeordnet sein kann. Dies ist also besonders dann der Fall, wenn der Hauptspeicher CMY aus einer Mehrzahl von parallel arbeitenden Speicherbanken MB besteht, wobei bei quasisimultanem Zugriff nach dem Zeitmultiplexprinzip auf die Teile MB des Hauptspeichers CMY, jeweils einzelne der Zeitschlitze bzw. Zeitkanäle auf dem Bussystem B:CMY jeweils einzelnen der Speicherbanken MB fest zugeordnet sein können.

Der Aufbau der einzelnen Organe dieser zentralen Steuereinheit, z.B. der Prozessoren BP/CP, der Speicherbanken MB bzw. des Hauptspeichers CMY, der IO-Prozessoren IOC, welche z.B. auch eine verschiedene Anzahl von lokalen Systembussen B:IOC, vgl. die Ausgänge 0...7 des IO-Prozessors IOCO, haben, kann jeweils an sich beliebig sein. Sie müssen nur zum gewählten Bussystem B:CMY passen bzw. an dessen Aufbau bzw. Betriebsweise angepaßt werden.

Im RAM-Teil des lokalen, prozessorindividuellen Speichers LMY können jeweils, zum Zwecke der Reduzierung der Zugriffe zum Hauptspeicher CMY, die für den Ablauf dynamisch wichtigen Codes und lokalen Daten abgespeichert werden. In einem ROM-Teil des lokalen dann relativ großen Speichers LMY können jeweils auch große Teile des umfangreichen Steuerprogrammes der Zentraleinheit - z.B. in allen Prozessoren CP jeweils identisch - gespeichert sein,z.B. Anlauf- und Fehlererkennungsprogramme, um im Bedarfsfall die Anlaufund Diagnosegeschwindigkeit dieser Prozessoren zu erhöhen, sowie - durch rasche völlige Ersetzbarkeit all diesem identisch geladenen Prozessoren mittels Umschaltung auf einen anderen dieser Prozessoren - die Verfügbarkeit der Zentraleinheit zu erhöhen. Die Prozessoren BP/CP können im Prinzip also jeweils weitgehend autonome Rechner mit per Ruf verteilten, an sich weitgehend identischen Aufgaben bzw. Rollen darstellen, welche über das Bussystem B:CMY, bevorzugt mittels des Hauptspeichers CMY, von Fall zu Fall mit anderen Organen der Zentralsteuereinheiten zusammenarbeiten.

Die peripheren Einheiten MBG können sowohl gerätetechnische Organe darstellen, als auch vermittlungstechnische Teilfunktionen von peripheren Organen, welche einen größeren Komplex verschiedener Funktionen ausführen, darstellen. Es genügt im allgemeinen, sie über ungedoppelte, also einfach vorhandene IO-Units,vgl. IOP;MB...IOP, an die IO-Prozessoren IOC anzuschließen, wenn die peripheren Organe, vgl. MBG, für sich Auskreuzungen enthalten, vgl. die Figur. Diese IO-Units IOP und/oder die zugehörigen IO-Prozessoren IOC können für sich zusätzliche Prüfungsfunktionen aufweisen, um unkontrollierte Zugriffe zu den Prozessoren BP, CP und zum Hauptspeicher CMY, welche auf Fehlern beruhen, zu erschweren.

Bei einen Beispiel gem. der Figur wurden für die Prozessoren BP/CP jeweils SAB 80286-Mikroprozessoren verwendet, die jeweils über einen physikalischen Adressraum von 16 MByte verfügen. Insgesamt wurden 12 solche Prozessoren mit je 2 MByte-Speichern LMY angebracht. Alle Prozessoren, nicht nur die Basisprozessoren,wurden zur Verbesserung der Fehlererkennung gedoppelt und waren jeweils nur paarweise abschaltbar. Die betreffenden Prozessorenpaare arbeiteten synchron. Bei Schreibzyklen wurden die Signale stets von einem bevorzugten Prozessor jedes Paares genommen, bei Lesezyklen wurden beide Prozessoren des Paares versorgt. Für den einzelnen Prozessor wurde die Unterscheidung zwischen lokalem, prozessorindividuellen Speicher LMY und Hauptspeicher CMY/MB jeweils über die Adresse durchgeführt, d.h. die für den lokalen, prozessorindividuellen Speicher belegten Adressen waren im Hauptspeicher für den betreffenden Prozessor (bzw.,bei Dopplung,für dieses betreffende Prozessorpaar) nicht direkt erreichbar. Die Kommunikation zwischen den Prozessoren BP und/oder CP und/oder IOC erfolgte über das Bussystem B:CMY und die Speicherbanken MB durch Setzen von Dringlichkeiten. Die aus Sicherheitsgründen gedoppelten Einheiten aus IO-Prozessor IOC, mit zugehörigem lokalen Bus B:IOC und IO-Unit IOP teilten sich im Regelfall die anfallenden Lasten. Der Datenaustausch zwischen den IO-Units IOP und den Prozessoren BP/CP erfolgte beim ausgeführten Beispiel über den Hauptspeicher CMY/MB, wobei für die Prozessoren IOC jeweils z.B. Bausteine 8036 verwendbar sind.

Auch die lokalen Busse B:IOC wurden im Zeitmultiplexbetrieb,d.h. mit Zyklenverschachtelung, betrieben, was den Durchsatz dieser Busse beträchtlich erhöhte, indem ein zweiter Zyklus schon dann angestoßen werden kann, bevor ein erster Zyklus abgeschlossen ist.

Im reinen Normalbetrieb ohne Spezialbetrieb arbeiteten die beiden Busse des Bussystems B:CMY im allgemeinen parallel und behandelten identische Informationen, solange keine der beiden Bushälften B:CMYO/B:CMY1 ausfiel. Das Bussystem B:CMY arbeitete nach einem Multiplexverfahren bevorzugt mit vier Zeitschlitzen, was bei Verwendung von 12 Prozessoren BP/CP für ein Fernsprech-Vermittlungssystem für mehrere zigtausend Teilnehmer, jedenfalls vorerst, ausreichte. Den vier Zeitschlitzen waren die hier nur vier Speicherbanken MB0...MB3 so zugeordnet, daß jeder Zeitschlitz fest einer Speicherbank zugeordnet war. Die Arbitrierung wurde vor der Zuteilung eines Zeitschlitzes an die Prozessoren BP/CP/IOC durchgeführt, um die Leistung des Bussystems zu steigern.

Zu den peripheren Einheiten zählten auch O/M-Einheiten (Operation and Maintenance), die bei Zentralsteuereinheiten schon bis-her oft verwendet werden. vgl. z. B. die Beschreibung von solchen Zentralsteuereinheiten, insbesondere des Typs SSP112D in Siemens, telcom report 4 (1981), Beiheft "Digitalvermittlungssystem EWSD". In dieser Druckschrift ist auch insbesondere die Funktion von peripheren Einheiten näher beschrieben.

Weitere Details über das in der Figur gezeigte Beispiel sind in den deutschen Patentanmeldungen DE-A 33 34 792 AI; DE-A 33 34 765 AI; DE-A 33 44 766AI; DE-A 33 34 797 AI und DE-A 33 34 773 angegeben.

Die erfindungsgemäße Abspaltung zum Konfigurieren des Spezialrechners ist bei dem in der Figur gezeigten Beispiel bevorzugterweise nur erlaubt, wenn diese betreffenden redundant abgespaltenen Teile verfdügbar sind, und wenn das IO-Unit IOB:MB des vermittelnden Restrechners im Zustand Acitve ist. Bei Bedarf können dem Spezialrechner sogar mehrere Vermittlungsprozessoren CP zugeteilt werden, soweit die dadurch herabgesetzte Leistungsfähigkeit des Restrechners vertretbar ist.

Abhängig von den durchzuführenden Aufgaben kann der Spezialrechner auch ein Magnetbandgerät und/oder einen Schnelldrucker benötigen. Diese können dann je nach Bedarf dem Spezialrechner oder dem Restrechner zugeordnet werden und sie können sogar während der Spezialbetriebszeit aus dem einen Rechner des Steuerrechners wegkonfiguriert werden und dann im anderen Rechner des Steuerrechners zugeschaltet werden. Die Bedienperson sollte dabei nicht tolerierbare Bedarfskonflikte vermeiden.

Folgende Betriebsfälle können im Rahmen des Spezialbetriebes unterschieden werden:
- Herstellen des Spezialrechners,
- Aufheben des Spezialrechners,
- Anlauf im Restrechner, und
- Anlauf im Spezialrechner.

Beim Herstellen des Spezialrechners werden im Zuge der Außerbetriebnahme z.B. eines Prozessors BP und/oder CP, nach einem kurzen Anhalten des Normalbetriebes im betreffenden Prozessor, pro derartigem Prozessor ein Neustart durchgeführt, z.B. durch Ändern der vermittlungstechnischen Ein-/Ausgabe, durch Umverteilen der vermittlungstechnischen Aufgaben, usw.. Bevorzugt bildet mindestens einer der Basisprozessoren BP, z.B. BPO, mit allen ihm verbliebenen Teilen/Betriebseinrichtungen den vermittelnden Restrechner. Im vermittelnden Restrechner erfolgen keine weiteren Anlaufaktionen.

Z.B. der andere Basisprozessor BP kann mit den ihm zugeordneten abgespaltenen Teilen/Betriebseinrichtungen den nicht vermittelnden Spezialrechner bilden. Dessen Inbetriebnahme geschieht zunächst z.B. noch mit dem geladenen Anlagenprogrammsystem, das in seinen lokalen Speicher LMY und z.B. in einer Speicherbankhälfte gespeichert sein kann. Nach dem Herstellen einer anlauffähigen Konfiguration wird mit einem Neustart, Wiederstart oder manuellen Urstart der Prozessoren BP(CP)der Spezialrechner (wieder) in Betrieb genommen. Im Spezialrechner müssen alle Prozesse den gespalteten Zustand des Steuerrechners berücksichtigen, um jede Störung des vermittelnden Restrechners zu vermeiden.

Das Aufheben des gespalteten Zustandes kann bevorzugt vom vermittelnden Restrechner veranlaßt werden. Alle Teile/Betriebseinrichtungen im nichtvermittelnden Spezialrechner werden, bevorzugt nämlich im Zuge einer Einzelinbetriebnahme,dem vermittelnden Restrechner nach und nach zugeführt. Die Spezialrechnerprozessoren werden hierbei wie bei einer Einzelprozessorinbetriebnahme behandelt.

Beim Anlauf im vermittelnden Restrechner nach seiner Herstellung bleiben alle Funktionen und Stufen des Anlaufs im vermittelnden Restrechner erhalten. Zusätzlich gelten aber bevorzugt folgende Ergänzungen: Ausfälle und Anläufe im nichtvermittelnden Spezialrechner werden vom vermittelnden Restrechner ignoriert. Ferner soll ein automatischer Urstart im vermittelnden Restrechner einen Anlauf des gesamten Steuerrechners auslösen, wobei der gespaltete Zustand in zwei Rechner automatisch aufgehoben wird. Während des Urstarts sind die Prozessoren CP bevorzugt ganz neu zu laden.

Beim Anlauf im nicht vermittelnden Spezialrechner sind die manuellen und automatischen Anlauffunktionen und Anlaufstufen bevorzugt folgendermaßen einzuschränken: Ein Urstart kann von Spezialrechner nicht ausgelöst werden; ein Urstart eines Prozessors CP ist jeweils bevorzugt nur manuell mit den Betriebseinrichtungen des nicht vermittelnden Spezialrechners möglich, wobei Rückwirkungen auf den vermittelnden Restrechner unter allen Umständen zu verhindern sind; stets ist in allen zugelassenen Anlauffällen des Spezialrechners der gespaltete Zustand des Steuerrechners zu berücksichtigen, damit eine Störung des vermittelnden Restrechners ausgeschlossen ist.

Der Spezialbetrieb wird spätestens durch eine Bedieneingabe oder durch eine Urstartbedingung nach Hardware-Ausfall im Restrechner beendet.

Dies kann z.B. in folgender Reihenfolge geschehen: Der betreffende Prozessor des Spezialrechners wird rückgesetzt, geprüft und schließlich inbetriebgenommen. Es folgt evtl. nun ein Umorganisieren/Erweitern der vermittlungstechnischen Ein-/Ausgabe, ferner bei manueller Inbetriebnahme evtl. eine Ausgabe eines Protokolls und die Anzeige des Steuerrechnerzustandes am Systempanel.

## Ansprüche

1. Verfahren zum Betrieb eines Multiprozessor-Steuerrechners, insbesondere für die Zentralsteuereinheit eines Fernsprech-Vermittlungssystems, wobei
   - zumindest ein Teil der Prozessoren (BP, CP, IOC, IOP) über erste Schalter (S) und dadurch über jede Hälfte (B:CMYO, B:CMY1) eines zentralen, in sich gedoppelten Bussystems (B:CMY) und daran angeschlossene zweite Schalter (SW) wahlweise Zugriff
     - auf jede Hälfte eines in sich gedoppelten Hauptspeichers (CMY) hat bzw.
     - auf jede Hälfte (z.B. MB3a und/oder MB3b) einer oder mehrerer, in sich gedoppelter Speicherbanken (MB) des eine Mehrzahl solcher Speicherbanken (MBO...MB3) enthaltenden Hauptspeichers (CMY) hat,
     
     **dadurch gekennzeichnet,** daß um in einer Spezialbetriebszeit redundante Teile des Steuerrechners abzuspalten und zu einem eigenen selbständigen Spezialrechner, ohne Störung des Normalbetriebes des restlichen Steuerrechners, zusammenzuschalten,
   - einzelne redundante dieser Prozessoren (z.B. CP9 und/oder IOC1) zusammen mit einer Hälfte (z.B. B:CMY1) des Bussystems (B:CMY) und zusammen mit einem Teil des Hauptspeichers (CMY) bzw. mit einer oder mehreren Hälften der Speicherbanken (MB) des Hauptspeichers (CMY), zu einem selbständigen Spezialrechner für ein Spezialprogramm,z.B. zur Vorbereitung einer neuen Modifikation des Normalbetriebsprogrammes des Steuerrechners, zusammengeschaltet werden,
   - während in den übrigen Teilen des Steuerrechners, also im Restrechner (BP, CP ohne CP9, IOCO mit dessen IOP, B:CMYO, Rest von CMY), weiterhin das bisherige Normalbetriebsprogramm, z.B.

für vermittlungstechnische Funktionen, abläuft,
   um später, spätestens bei Überlastung des Restrechners, insbesondere bei Ausfall eines wesentlichen Prozessors des Restrechners, das Spezialprogramm des Spezialrechners zu beenden bzw. unterbrechen
   - die Bestandteile des Spezialrechners, zumindest ein wesentlicher Teil seiner Prozessoren und/oder zumindest seine Bussystemhälfte (B:CMY1), wieder mit dem Restrechner so verbunden werden, daß danach jedenfalls im wesentlichen, nur noch das Normalbetriebsprogramm, oder eine in der Spezialbetriebszeit neu eingegebene Modifikation davon, abläuft.

## Claims

1. A method for operating a multi-processor controller, particularly for the central control unit of a telephone switching system, wherein
   - at least some of the processors (BP, CP, IOC, IOP) have, via first switches (S) and, as a result, via each half (B:CMYO, B:CMY1) of a central bus system (B:CMY) doubled in itself, and second switches (SW connected) thereto, optional access
     - to each half of a main memory (CMY) doubled in itself, or, respectively,
     - to each half (for example MB3a and/or MB3b) of one or more memory banks (MB) doubled in themselves of the main memory (CMY) containing a plurality of such memory banks (MBO...MB3), characterised in that, in order to split off redundant parts of the controller during a special operating time and connect these parts to an independent separate special computer without interfering with the normal operation of the remaining controller,
   - individual redundant ones of these processors (for example CP9 and/or IOC1), together with one half (for example B:CMY1) of the bus system (B:CMY) and together with a part of the main memory (CMY) or with one or more halves of the memory banks (MB) of the main memory (CMY) are connected together to form an independent special computer for a special program, for example for preparing a new modification of the normal operating program of the controller,
   - Whereas in the remaining parts of the controller, that is to say in the remaining computer (BP, CP without CP9, IOCO with its IOP, B:CMYO, remainder of CMY) the previous normal operating program still runs, for example for switching-related functions, in order to terminate or interrupt the special program of the special computer later, at the latest when the remaining computer is overloaded, particularly in the case of a failure of an essential processor of the remaining computer

- the components of the special computer, at least an essential part of its processors and/or at least its bus system half (B:CMY1) are again connected to the remaining computer in such a manner that thereafter, in any case essentially only the normal operating program or a modification thereof, newly entered during the special operating time, is now running.

## Revendications

1. Procédé d'exploitation d'un ordinateur ou calculateur de commande à multiprocesseur, notamment destiné à l'unité centrale d'un système de commutation téléphonique, dans lequel :

- au moins une partie des processeurs (BP, CP, IOC, IOP) a, par l'intermédiaire de premiers interrupteurs (S), et, de ce fait, par l'intermédiaire de chaque moitié (B:CMYO, B:CMYL) d'un bus central dédoublé (B:CMY) et par l'intermédiaire de deuxièmes interrupteurs reliés au bus,
- accès à chaque moitié d'une mémoire principale (CMY) et/ou
- à chaque moitié (par exemple MB3a et/ou MB3b) d'une ou de plusieurs banques de mémoires dédoublées (MB) de la mémoire principale (CMY), contenant une pluralité de telles banques de mémoires (MBO, ..., MB3),

caractérisé en ce que, pour isoler, pendant une durée de service spécial, des parties redondantes du calculateur ou ordinateur de commande, et pour les connecter en un calculateur ou ordinateur special, sans perturbation du fonctionnement normal du reste du calculateur ou ordinateur de commande,

- certains de ces processeurs redondants (par exemple CP9 et/ou IOC1), ainsi qu'une moitié (par exemple B:CMYL) du système de bus (B:CMY), et une partie de la mémoire principale (CMY), ou avec une ou plusieurs moitiés des banques de mémoires (MB) de la mémoire principale, sont connectés pour constituer un calculateur ou ordinateur spécial et indépendant, propre à exécuter un programme spécial, par exemple pour préparer une nouvelle modification du programme d'exploitation normal du calculateur ou ordinateur de commande,

- alors que dans les autres parties du calculateur ou ordinateur de commande, donc dans le calculateur ou ordinateur restant (BP, CP sans CP9, IOCO avec son IOP, B:CMYO, le reste de CMY), se déroule le programme d'exploitation normale dont l'exécution se poursuit, par exemple destiné aux opérations de la technique de la commutation, pour ensuite, et au plus tard en cas de surcharge du calculateur ou de l'ordinateur restant, notamment en cas de défaillance d'un processeur essentiel du calculateur ou ordinateur restant, terminer ou interrompre le programme spécial du calculateur ou ordinateur spécial,

- les éléments du calculateur ou ordinateur spécial, au moins une partie essentielle de ses processeurs et/ou au moins son demi-bus (B:CMYL) sont de nouveau reliés au calculateur ou ordinateur restant, de telle sorte qu'ensuite se déroule, au moins pour l'essentiel, seul le programme d'exploitation normal, ou une nouvelle modification de celui-ci, introduite au cours de la période de fonctionnement spécial.

1/1